# EUROPEAN PATENT APPLICATION

(11) **EP 4 427 976 A1**
(43) Date of publication of application: **11.09.2024**
(21) Application number: 23219398.7
(22) Date of filing: 21.12.2023
(51) Int. Cl.: B60L 53/80

(54) **START-STOP CONTROL DEVICE, START-STOP CONTROL METHOD, BATTERY SWAP STATION, AND STORAGE MEDIUM**

(30) Priority: 06.03.2023 CN 202310200685
(71) Applicant: Nio Technology (Anhui) Co., Ltd, Hefei City, Anhui 230611 (CN)
(72) Inventor: WANG, Yifei, Hefei City, Anhui, 230611 (CN); ZHANG, Ligui, Hefei City, Anhui, 230611 (CN); ZHENG, Feifei, Hefei City, Anhui, 230611 (CN); XU, Huazhen, Hefei City, Anhui, 230611 (CN); ZOU, Jiyong, Hefei City, Anhui, 230611 (CN)
(74) Representative: Vossius & Partner Patentanwälte Rechtsanwälte mbB

(57) **Abstract**

The disclosure provides a start-stop control device, a start-stop control method, a battery swap station, and a computer-readable storage medium. The start-stop control device includes: a calculation unit configured to perform detection on a battery swap facility and a battery swap process, and generate interactive information about start and stop of the battery swap facility based on a detection result, which interactive information is then transmitted to both a control unit and a central control unit; the control unit configured to generate, based on the interactive information, a control command for controlling the start and stop of the battery swap facility, the control command being reported to the central control unit as battery swap state information; and the central control unit configured to perform evaluation on the interactive information and the battery swap state information, and selectively issue a manual intervention request based on an evaluation result, where the control unit is configured to perform detection on a communication state between the control unit and the calculation unit in real time based on the interactive information, and generate a control command for stopping the battery swap facility in response to a communication abnormality. The device can prevent untimely start-stop control caused by a communication abnormality, and thus improve the operational safety of a battery swap station.

## Description

### Technical Field

The disclose relates to a start-stop control device for a battery swap facility, a start-stop control method executable by the device, a battery swap station including the device, and a computer-readable storage medium for executing such a start-stop control method, where the battery swap facility is used for executing relevant battery swap processes, especially for performing mechanical movements to complete the relevant battery swap processes.

### Background Art

When battery swap operations are performed on an electric vehicle, a corresponding battery swap facility (such as a robotic arm, a battery transport vehicle, a closable door driving mechanism, or a hoisting mechanism) is required to complete an entire battery swap process, including removal of a used battery and mounting of a service battery. In unmanned applications in intelligent industrial scenarios, there is a need to use intelligent algorithms to detect some abnormalities, such as an abnormal entry of personnel/living things, and presence of a foreign object on a surface of a mechanical device, and then stop mechanical movements in a timely manner, so as to prevent the mechanical movements from causing damage to the personnel and other mechanical facilities. Therefore, how to control the operation of the battery swap facility more reliably and effectively needs to be considered.

A variety of automatic abnormality detection and control methods are known in the prior art. Typically, intelligent devices are used to generate relevant control instructions, which involve a specific control instruction for a mechanical battery swap facility in a battery swap station and are indirectly passed through a central control device to a proximal controller of the mechanical battery swap facility, and the proximal controller then controls the operation of the involved mechanical battery swap facility in accordance with the control instruction. Here, the three serve as a decision-making end, a transfer end, and a passive receiving end, respectively, and are generally connected to each other through an industrial network. As a result, a failure scenario such as a disconnection failure scenario may occur in the entire link. Moreover, in the case of poor cooperation between the three, the overall battery swap process may be disrupted, which is undoubtedly not desired. In addition, this control method weakens the function of the proximal controller to a certain extent and may increase the computing load of the intelligent control device.

### Summary

According to different aspects, an objective of the disclosure is to provide a start-stop control device for a battery swap facility, especially a moving mechanical component, in a battery swap station, a start-stop control method executable by the device, a battery swap station including the device, and a computer-readable storage medium.

In addition, the disclosure also aims to solve or alleviate other technical problems existing in the prior art.

To solve the above problems, the disclosure provides a start-stop control device, specifically for a battery swap facility, the start-stop control device including:
a calculation unit configured to perform detection on the battery swap facility and a battery swap process executed by the battery swap facility, and generate interactive information about start and stop of the battery swap facility based on a detection result, which interactive information is then transmitted to both a control unit and a central control unit;
the control unit configured to generate, based on the interactive information, a control command for controlling the start and stop of the battery swap facility, the control command being reported to the central control unit as battery swap state information; and
the central control unit configured to perform evaluation on the interactive information and the battery swap state information, and selectively issue a manual intervention request based on an evaluation result,
where the control unit is configured to perform detection on a communication state between the control unit and the calculation unit in real time based on the interactive information, and generate a control command for stopping the battery swap facility in response to a communication abnormality.

In the start-stop control device according to an aspect of the disclosure, the interactive information carries a signal transmission identifier, algorithm state information about a calculation algorithm deployed in the calculation unit, and suggestion information about the start and stop of the battery swap facility.

In the start-stop control device according to an aspect of the disclosure, the communication abnormality includes at least one of: absence of the interactive information, an abnormality in the signal transmission identifier, and inconsistency between the algorithm state information and an operating state of the control unit.

In the start-stop control device according to an aspect of the disclosure, the central control unit is configured to generate the manual intervention request in response to inconsistency between the received interactive information and the battery swap state information, or in response to a failure to receive the interactive information and/or the battery swap state information, and the manual intervention request is transmitted to an external human-machine interaction apparatus.

In the start-stop control device according to an aspect of the disclosure, the central control unit is configured to generate an abnormality handling log while generating the manual intervention request, and the control unit is configured to generate the abnormality handling log in the case of the communication abnormality.

In the start-stop control device according to an aspect of the disclosure, the calculation unit includes: an edge calculation device, a cloud calculation device connected in series at a lower level of the edge calculation device, and a confidence level assessment device, where a cloud calculation algorithm deployed in the cloud calculation device has a higher confidence level than an edge calculation algorithm deployed in the edge calculation device, and the cloud calculation device is activated in response to determining, by means of the confidence level assessment device, that the edge calculation device has a confidence level lower than a first preset threshold.

In the start-stop control device according to an aspect of the disclosure, the confidence level assessment device is further configured to compare a confidence level of the cloud calculation device with a second preset threshold, and issue the manual intervention request in response to the confidence level being lower than the second preset threshold, where the second preset threshold is higher than the first preset threshold.

According to another aspect of the disclosure, a start-stop control method executable by the start-stop control device described above is further provided. The method includes the steps of:
performing detection on a state of a battery swap facility and a state of a battery swap process in real time, and generating interactive information based on the state of the battery swap facility and the state of the battery swap process;
determining a communication state between a control unit and a calculation unit based on the interactive information, and generating a control command for controlling start and stop of the battery swap facility; and
evaluating a matching degree between the interactive information and the control command, and selectively issuing a manual intervention request based on the matching degree,
where when the communication state indicates a communication abnormality, a control command for stopping operation of the battery swap facility is generated.

In the start-stop control method according to another aspect of the disclosure, the generating interactive information based on the state of the battery swap facility and the state of the battery swap process is performed by:
generating the interactive information by means of an edge calculation algorithm and based on the state of the battery swap facility and the state of the battery swap process; obtaining a confidence level of the edge calculation algorithm and comparing the confidence level with a first preset threshold, and if the confidence level is greater than or equal to the first preset threshold, outputting the interactive information, otherwise activating a cloud calculation algorithm and regenerating interactive information by means of the cloud calculation algorithm; and
obtaining a confidence level of the cloud calculation algorithm and comparing the confidence level with a second preset threshold, and if the confidence level is greater than or equal to the second preset threshold, outputting the interactive information generated by the cloud calculation algorithm, otherwise issuing the manual intervention request.

In the start-stop control method according to another aspect of the disclosure, before activation of the cloud calculation algorithm, calculation tasks to be performed by the cloud calculation algorithm are prioritized, where high-priority calculation tasks are processed first, and low-priority calculation tasks are recorded and delayed.

In the start-stop control method according to another aspect of the disclosure, the communication abnormality includes: absence of the interactive information, an abnormality in the signal transmission identifier, and inconsistency between the algorithm state information and an operating state of the control unit.

In the start-stop control method according to another aspect of the disclosure, an abnormality handling log is generated while the manual intervention request is issued.

According to yet another aspect of the disclosure, a battery swap station is further provided, which includes a battery, a battery swap facility for executing a battery swap process, and the start-stop control device described above.

Finally, according to still another aspect of the disclosure, a computer-readable storage medium having a computer program stored thereon is provided, where when the computer program is executed by a processor, the start-stop control method for a battery swap facility described above is implemented.

The start-stop control device for a battery swap facility according to the disclosure can prevent the problem of untimely start-stop control caused by a communication abnormality, and thus improve the operational safety of a battery swap station.

### Brief Description of the Drawings

The above and other features of the disclosure will become apparent with reference to the accompany drawings, in which:
FIG. 1 is a simplified diagram of a structure of a start-stop control device according to the disclosure;
FIG. 2 is a working flowchart of a calculation unit of the start-stop control device;
FIG. 3 is a flowchart of a calculation process of the calculation unit;
FIG. 4 is a working flowchart of a control unit of the start-stop control device; and
FIG. 5 is a working flowchart of a central control unit of the start-stop control device.

### Detailed Description of Embodiments

It can be readily understood that according to the technical solution of the disclosure, those of ordinary skill in the art may propose multiple interchangeable structures and implementations without changing the essential spirit of the disclosure. Therefore, the following specific embodiments and the accompanying drawings are merely exemplary descriptions of the technical solutions of the disclosure, and should not be construed as the entirety of the disclosure or construed as limiting the technical solution of the disclosure.

Orientation terms, such as up, down, left, right, front, rear, front side, back side, top, and bottom, which are or may be mentioned in this description, are defined with respect to the structures shown in the accompanying drawing, and are relative concepts, and therefore may correspondingly vary depending on different positions and different usage states. Therefore, these or other orientation terms should not be construed as restrictive terms as well. Moreover, the terms such as "first" "second", "third" or similar expressions are only used for description and distinction purposes, and should not be construed as indicating or implying the relative importance of corresponding members.

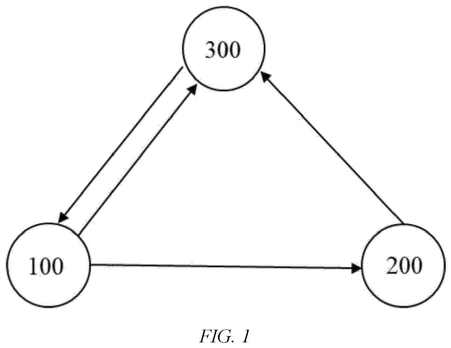

FIG. 1 is a simplified diagram of a structure of a start-stop control device according to the disclosure, with communications between components of the start-stop control device represented by arrows. The device can control a battery swap facility in a battery swap station that is used to perform various battery swap operations, especially a mechanical battery swap facility that is used to perform relevant mechanical movements. The battery swap facility can be, but is not limited to, the following component: a hoisting mechanism for raising and lowering an electric vehicle, a locking/unlocking gun for disassembling a battery, a battery transport trolley for transporting a battery between a battery compartment and a battery swap location, a closable door driving mechanism, etc. To be more specific, it is to be understood that the start-stop control device should stop and restart the battery swap facility in a timely manner when needed (when an abnormality occurs or as determined by a battery swap process).

First, it should be noted that the disclosure is intended to provide a reliable method for controlling start and stop of a battery swap facility, especially taking a communication failure scenario of an industrial local area network into consideration here. To this end, this start-stop control device generally includes a calculation unit 100, a control unit 200, and a central control unit 300. The three units can communicate with each other via the industrial local area network, so as to complete battery swap operations in coordination with each other. The calculation unit 100 performs detection on the battery swap facility and the battery swap process executed by the battery swap facility, and generates interactive information based on a detection result. The interactive information indicates at least an ideal start-stop state of the battery swap facility and is transmitted to the control unit 200 at a proximal end of the battery swap facility. Furthermore, the control unit 200 at the proximal end of the battery swap facility can be configured as a programmable logic controller (PLC), and the control unit itself can control an operating state of the battery swap facility, for example, by running its software to control a torque or current of a motor of the battery swap facility, thereby controlling the start and stop of the battery swap facility. The control unit 200 can at least perform detection on a communication state between the control unit itself and the calculation unit 100 in real time. Alternatively, the control unit 200 can perform detection simultaneously on the communication state between the control unit itself and the calculation unit 100 and a communication state between the control unit itself and the central control unit 300 in real time, and generate a control instruction based on the communication states and the situation of the control unit itself. In additional embodiments, the calculation unit, the control unit, and the central control unit communicate with each other, and each of them can perform detection and supervision on the communication states therebetween.

When the start-stop control device is operating, the calculation unit 100 transmits the interactive information to the central control unit 300 in a form that matches the central control unit 300. At the same time, the control unit 200, especially the PLC, transmits the control instruction generated by itself to the central control unit 300 in a form that matches the central control unit 300 (i.e., battery swap state information). Subsequently, the central control unit 300 performs evaluation on the interactive information and the battery swap state information, and then decides whether to issue a manual intervention request. Here, the manual intervention request can be displayed on a human-machine interaction apparatus, and in an unattended battery swap station, online staff can be summoned based on this request, to handle relevant abnormalities in a timely manner.

Exemplarily, the central control unit 300 issues an event notification to the calculation unit 100, and supervises the calculation unit 100 and the control unit 200 through information feedback and records abnormalities. The event notification may relate to a progress of the battery swap process, or specifically to a battery swap operation to be performed. In other cases, the event notification may also relate to an event triggered by staff at the battery swap station. According to the event notification, the calculation unit 100 generates the interactive information (which can also be called suggestion information depending on its function) in real time, and then transmits the interactive information to both the central control unit 300 and the control unit 200. Subsequently, the control unit 200 generates a control command directly for a mechanical battery swap component based on the interactive information, allowing an operating state of the battery swap facility to be switched in a timely manner. In indirect start-stop control means in the prior art, the central control unit 300 is only used as a transfer terminal. By contrast, in the disclosure, the proximal control unit 200 is given a certain subjective control right to ensure control efficiency, and direct communication with the calculation unit 100 makes it possible to effectively prevent consequences of a communication failure or a communication delay.

Subsequently, further explanations will be given with the start-stop control device for use in a locking/unlocking gun. When the battery swap process proceeds to the step of "performing screwing by the locking/unlocking gun", the central control unit 300 gives a corresponding event notification to the calculation unit 100. The calculation unit 100 performs state detection on the locking/unlocking gun in real time and additionally performs safety detection on the surroundings, and calls a pre-stored calculation algorithm to issue interactive information including suggestion information about the start and stop of the battery swap facility (i.e., battery swap start-stop suggestion information), which interactive information is passed to the control unit 200 and the central control unit 300 in real time. After receiving the interactive information, the central control unit 300 parses the interactive information and records the start-stop suggestion information. The control unit 200 generates a relevant control command for the locking/unlocking gun based on the interactive information, and feeds the control command back to the central control unit 300, for example, outputs a control command for a rotation speed, a torque, etc. of a motor of the locking/unlocking gun. If the central control unit 300 determines that the interactive information given by the calculation unit 100 is inconsistent with the feedback from the control unit 200, the central control unit records an abnormality and makes a request for manual intervention.

It should be noted here that, according to the disclosure, the proximal control unit 200, when detecting a communication abnormality, especially when detecting that a communication abnormality occurs between the proximal control unit and the calculation unit 100, directly generates a control command for stopping the battery swap facility. At the same time, the control unit 200 generates an abnormality handling log for the communication abnormality, to facilitate subsequent troubleshooting. It can be seen that the central control unit 300 essentially functions as a supervisor, which makes it possible and advantageous to handle an abnormality in a timely manner.

The control unit 200 can also be configured such that if the control unit does not detect a communication abnormality, it can control relevant operating parameters, such as the torque or current of the motor, of the battery swap facility based on the interactive information, especially on the start-stop suggestion information in the interactive information. In this way, timely and effective control can be ensured, and the depth of perception of the intelligent calculation unit and the accuracy of intelligent calculation can also be sustained.

The control unit 200 for the battery swap facility, especially the PLC, detects, based on the interactive information, whether the communication between the control unit and the calculation unit 100 is disconnected and whether the communication is trustworthy. In an ideal situation, if the communication between the PLC and the calculation unit 100 is disconnected (that is, the interactive information is absent), the PLC controls the battery swap facility to stop operating, and preferably, immediately controls the battery swap facility to stop operating; or if the PLC remains linked with the calculation unit 100 but the communication state therebetween does not meet requirements, the PLC also enables the battery swap facility to stop operating.

Optionally, the calculation unit 100 and the control unit 200 that can be implemented as the PLC comply with a communication protocol below. To be specific, the interactive information issued by the calculation unit 100 carries a signal transmission identifier for sorting the interactive information, algorithm state information of each calculation algorithm deployed in the calculation unit 100 (the algorithm information involving an algorithm version number, and an algorithm running state, such as "supported", "not supported", "not running", of each calculation algorithm), the suggestion information about the start and stop of the battery swap facility, etc., where the algorithm state information may be used as a reference for the operating state of the PLC. Here, the "operating state" of the PLC relates to the type of software running in the PLC. In other words, the "operating state" relates to an action of the PLC. Specifically, the interactive information is sent to the control unit 200 at a preset frequency (for example, every 50 ms), and an information length of the interactive information is positively related to the number of detection and perception algorithms of the calculation unit 100.

For the signal transmission identifier, in the simplest case, it can be assigned a value "0" or "1" alternately in chronological order; It is also possible that the signal transmission identifier may be assigned the value "0" for the odd-numbered times and "1" for the even-numbered times, depending on a count of the number of times the interactive information is sent. If the signal transmission identifier does not change within preset T frames, for example, always at "0" or "1" within the preset T frames, or "0" and "1" are assigned in disorder, i.e., an abnormality in the signal transmission identifier, the control unit 200 determines that there is an abnormality in the communication with the calculation unit 100. In this case, the control unit 200 directly stops the operation of the battery swap facility or keeps the battery swap facility out of operation, independently of the start-stop suggestion information in the interactive information. Alternatively, the signal transmission identifier can also be generated in a quaternary form or in any other form, to identify the above abnormality more intuitively.

In addition, if the control unit 200 does not receive any interactive information within a certain period, the control unit 200 determines such absence of interactive information to be the communication abnormality and thereby stops the operation of the battery swap facility or keeps the battery swap facility out of operation.

For the algorithm state information, the interactive information gives the algorithm version number of each calculation algorithm (such as an edge calculation algorithm and a cloud calculation algorithm, which will be described later) in the calculation unit 100 and the state information for this version of the algorithm. For example, the interactive information gives each algorithm version number and data corresponding thereto. The data can be, for example, selected from a data field containing "0", "1" and "-1", where "0" represents running supported, "1" represents running not supported, and "-1" represents not running. If the control unit 200 concludes that parsed algorithm state information is inconsistent with its own operating state or action, the control unit controls the battery swap facility to stop operating or to keep the battery swap facility out of operation, and also reports this battery swap state information "out of operation" to the central control unit 300, to facilitate subsequent overhaul. Here, it may be appreciated that the algorithm state information given by the calculation unit 100 instructs to run a calculation algorithm 1 (such as to perform a screwing operation by the locking/unlocking gun), while the control unit is performing a different control action (such as controlling the locking/unlocking gun to perform an unscrewing operation). In this case, the control unit determines this inconsistency as the communication abnormality and controls the battery swap facility to stop operating or to keep the battery swap facility out of operation. In addition, the algorithm version number is given here mainly for the consideration as follows. There are different versions of a calculation algorithm for different battery swap operations, and inconsistent version numbers may also result in a fault.

Optionally if the central control unit 300 does not receive the interactive information from the calculation unit 100, or the battery swap state information from the control unit 200, or both, the central control unit issues the manual intervention request, which can be displayed on an external human-machine interaction apparatus and notify online staff for inspection and handling. In addition, if the central control unit 300 has received the interactive information and the battery swap information but the two are inconsistent (for example, the interactive information indicates that the battery swap facility can continue to operate but the control unit concludes that the battery swap facility needs to stop operating, or vice versa), the central control unit 300 also issues the manual intervention request and generates an abnormality handling log, which log can be used as a main basis for subsequent overhaul and troubleshooting.

The calculation unit 100 can relate to a calculation algorithm for the battery swap station or the battery swap process that is constructed in any form. Optionally, the calculation unit has both an edge calculation device and a cloud calculation device, on either of which at least one calculation algorithm is deployed. The calculation algorithms on the two calculation devices are different in terms of computing power and confidence level. The cloud calculation algorithm deployed in the cloud calculation device has a greater computing power and higher confidence level than the edge calculation algorithm in the edge calculation device. Thus, the edge calculation device is connected in series at an upper level of the cloud calculation device, so that only calculation tasks that meet a preset condition are transferred to the cloud calculation device. Here, the preset condition relates to a confidence level of a calculation result. Accordingly, the calculation unit 100 includes a confidence level assessment device, which is configured to, when a confidence level of the edge calculation device is lower than a first preset threshold, activate the cloud calculation device, which then takes over a calculation task.

It should be noted here that the two concepts that "the edge calculation device is connected in series at an upper level of the cloud calculation device" and "the cloud calculation device is connected in series at a lower level of the edge calculation device" relate to a logically series relationship between the calculation algorithms stored in the two devices. That is to say, according to the regulations, the calculation algorithm in the edge calculation device is first run and then the calculation algorithm in the cloud calculation device is run. Such series relationship should not be understood as a series connection between physical devices, in which the edge calculation device can be optionally arranged in the battery swap station, while the cloud calculation device can be deployed in a cloud server or a cloud.

Optionally, in order to further ensure accuracy, the confidence level assessment device is also connected to the cloud calculation device and compares a confidence level of the cloud calculation device with a second preset threshold. If the confidence level is lower than the second preset threshold, the confidence level assessment device issues a manual intervention request and allows online staff to handle and check.

It can be seen therefrom that, according to the disclosure, the central control unit in the traditional sense is allowed to serve as a supervisor and the control unit at the proximal end of the battery swap facility is given a certain decision-making right, such that the problem of untimely start-stop control caused by a communication abnormality can be prevented, and the operational safety of the battery swap station can thus be improved. In addition, according to another embodiment of the start-stop control device, when the communication abnormality is detected by self-checking, the control unit stops the operation of the battery swap facility or keeps the battery swap facility out of operation by means of the generated control command, thereby ensuring the operational safety of the battery swap station. Furthermore, according to another embodiment of the start-stop control device, the use of specially designed interactive information makes it easier to determine whether there is a communication abnormality, so as to stop the battery swap facility in a timely manner. In addition, according to yet another embodiment of the start-stop control device, the edge calculation device and the cloud calculation device connected in series allow the calculation tasks to be filtered while ensuring the accuracy of calculations, thereby reducing the calculation load.

In addition, the disclosure further provides a start-stop control method executable by the start-stop control device described above. The method mainly includes the steps of:
S 100: performing detection on a state of a battery swap facility and a state of a battery swap process in real time, and generating interactive information based on the state of the battery swap facility and the state of the battery swap process, which may be implemented by a calculation unit;
S200: determining a communication state between a control unit and the calculation unit based on the interactive information, and generating a control command for controlling start and stop of the battery swap facility, which may be implemented by the control unit; and
S300: evaluating a matching degree between the interactive information and the control command, and selectively issuing a manual intervention request based on the matching degree, which may be implemented by a central control unit.

When the communication state indicates a communication abnormality, a control command for stopping operation of the battery swap facility is generated.

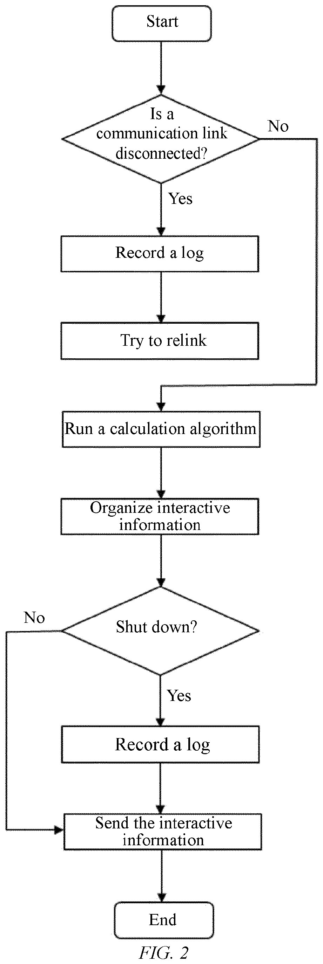

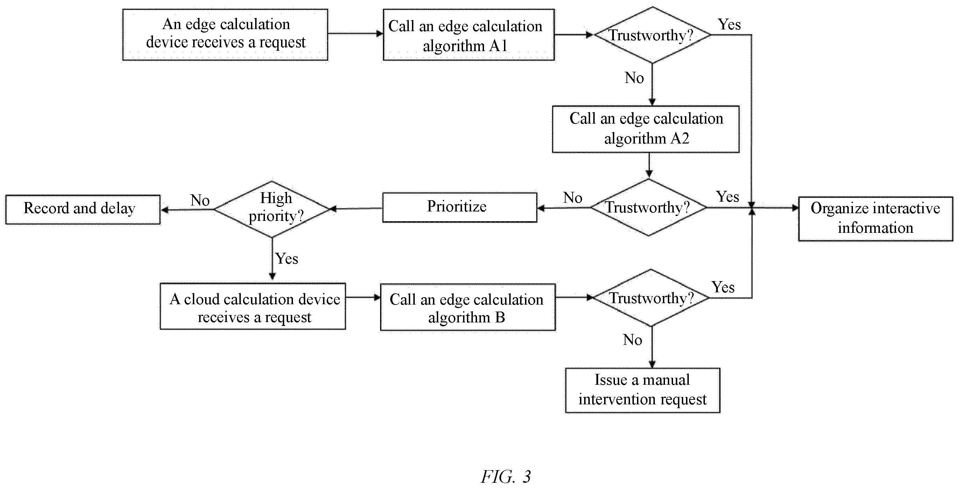

Next, an execution process of the above method will be described in more detail with reference to FIGS. 2 to 5. As shown in FIGS. 2 and 3, the calculation unit 100 detects, in real time, whether a link with the control unit 200 and the calculation unit 100 is disconnected. If the link is disconnected, the calculation unit records a local log and retries to link with the two. If the link is not disconnected, the calculation unit determines whether a specific calculation algorithm needs to be executed under an event notification given by the central control unit 300. If the result is yes, the calculation algorithm is run and algorithm state information is organized; or if the result is no, the algorithm state information is set to be null. Subsequently, according to a calculation result, start-stop suggestion information regarding whether the battery swap facility needs to be shut down is organized. The start-stop suggestion information and the algorithm state information are assigned a signal transmission identifier to generate the interactive information described above, which is then transmitted to both the control unit 200 of the battery swap facility and the central control unit 300. If the battery swap facility is required to stop operating, the calculation unit 100 can optionally record a local log to facilitate subsequent maintenance. For the sake of convenience, it is possible to feed only the start-stop suggestion information back to the central control unit 300.

Optionally, the calculation unit 100 may perform calculations in a hierarchical filtering manner according to FIG. 3. Two edge calculation algorithms A1 and A2 of the same family are deployed in the edge calculation device, and a cloud calculation algorithm B is deployed in the cloud calculation device. The three calculation algorithms may be constructed as a probability model. For example, the calculation unit 100 needs to determine whether a picture contains a certain target. According to the probability model, a probability (0 to 100%) indicating that the image contains the target will be obtained. If the filtering criterion (analogous to the first preset threshold or the second preset threshold) is set to 98%, it is equivalent to requiring the algorithm model to be very sure of an output before the output is approved. The calculation algorithms A1, A2, and B have a gradually increasing computing power and confidence level, and take an gradually increasing calculation time.

After the calculation unit 100 has received an event notification from the central control unit 200, the edge calculation device receives a calculation request and calls the edge calculation algorithm A1. Next, the confidence level of the calculation algorithm A1 (such as the probability value in the probability model described above) is compared with the first preset threshold. If the confidence level is less than the first preset threshold, the calculation algorithm is determined to be untrustworthy, and the edge calculation algorithm A2 of the same family is called. Then, the same method is used to determine whether a calculation result of the edge calculation algorithm is trustworthy. If the confidence level of the edge calculation algorithm does not meet a standard, the cloud calculation device may be required.

Before the calculation request is input into the cloud calculation device, further filtering of a calculation task may be performed in such a way that the calculation request is prioritized, and if the calculation request has a high priority, the cloud calculation device accepts and processes the calculation task. Here, an example of priority is given. A high-priority calculation task is a calculation task that needs to be processed as soon as possible, such as when there is a living thing at a moving mechanical battery swap facility, a gun tip of a locking/unlocking gun is missing, or there is a foreign object at a closable door; in contrast, a low-priority calculation task is a calculation task that can be delayed, such as when there is dirt on the exterior of a battery, or the exterior of a used battery is damaged. For the latter case, the calculation unit can delay and record the low-priority calculation task for reference later. In a relatively simple example, a relevant electric vehicle can be controlled to leave a battery swap station first, to avoid congestion and facilitate reasonable allocation of battery swap resources.

After receiving the calculation task, the cloud calculation device calls the cloud calculation algorithm B for processing. Subsequently, the cloud calculation device determines whether a calculation result of the cloud algorithm B is trustworthy, which can be specifically performed by comparing the confidence level (such as the probability value in the probability model described above) of the calculation algorithm with the second preset threshold. If the confidence level is less than the second preset threshold, it is determined that the result is untrustworthy, and optionally, a manual intervention request is issued to allow online staff to take over. If the confidence level is greater than or equal to the second preset threshold, it is determined that the result is trustworthy, and the generated interactive information is output. Optionally, the cloud calculation device, when involved, can record information related to the calculation task in a description in the cloud, so as to facilitate subsequent optimization of each of the deployed algorithms.

In general, when the confidence level of a result of one of the calculation algorithms A1, A2, and B deployed, in series, at multiple levels reaches the standard, the interactive information generated by the calculation algorithm is output. In other words, it is this stepwise involvement manner that achieves the best match between computing resources and calculation tasks. As a terminal actuator, the cloud calculation device plays the role of final check on the confidence level. Even if the confidence level of the cloud calculation device does not meet the standard, staff can intervene, which also ensures the operational safety of the battery swap station.

In addition, it should be noted that the number of calculation algorithms of the same family that are deployed in the edge calculation device and the cloud calculation device is selected according to actual situations. Preferably, it is possible to deploy only one calculation algorithm for a certain calculation task when the computing power and algorithm performance allow.

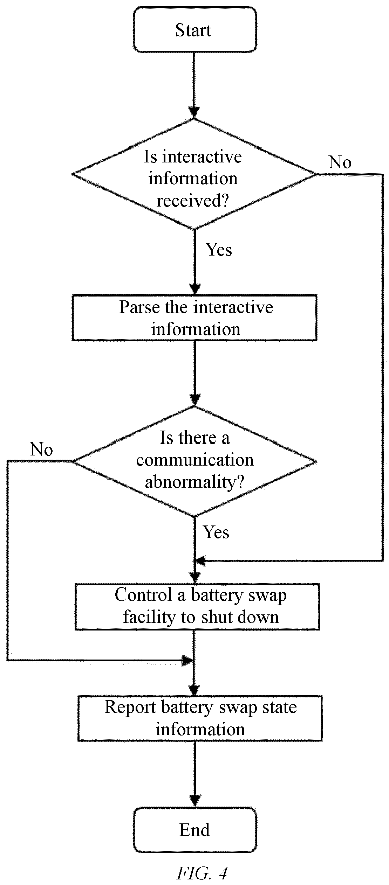

Next, a specific working process of the control unit 200 at the proximal end of the battery swap facility is described with reference to FIG. 4. First, the control unit 200 detects, in real time, whether a communication abnormality occurs. Specifically, the control unit 200 detects whether interactive information is received. If the result is yes, the interactive information is parsed; or if the result is no, it is determined that there is a communication abnormality, and then a control command is issued to cause the battery swap facility to stop operating. Here, in the interactive information, algorithm state information, a signal transmission identifier, and optionally, a timestamp are parsed, to determine whether there is an abnormality in the signal transmission identifier, and whether the algorithm state information is consistent with an operating state of the control unit. After the communication abnormality is detected and the control command for stopping the operation is thus issued, a local log may be recorded, and attempts continued to be made to restore the link. The log is uploaded after the link is restored. The control unit reports battery swap state information in the control command to the central control unit.

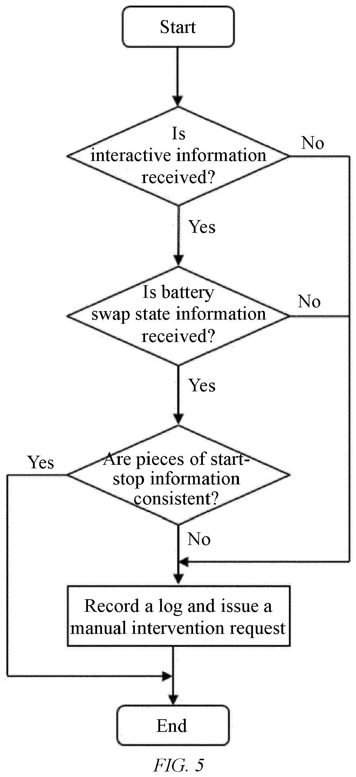

Furthermore, a specific working process of the central control unit 300 is described with reference to FIG. 5. In response to receiving interactive information from the calculation unit 100, the central control unit 300 records start-stop suggestion information, especially its stop state. At the same time, the central control unit 300 parses the reported battery swap state information and detects whether the control unit 200 issues a shutdown control command. If the central control unit concludes that the calculation unit 100 gives a different feedback regarding whether to shut down than that given by the control unit 200, the central control unit 300 issues a manual intervention request and records a local log. Of course, if the control unit 200 give the same feedback as the calculation unit 100, a local log can also be recorded according thereto optionally. In general, the central control unit 300 evaluates whether the calculation unit 100 gives a start-stop strategy for a battery swap facility that is consistent with that given by the control unit 200, and if not, the central control unit issues the manual intervention request.

For the start-stop control method according to the disclosure, reference can be made accordingly to the descriptions of the start-stop control device above, and details are not described herein again.

In addition, the disclosure further relates to a battery swap station, which includes a traction battery (especially stored in a battery compartment) for an electric vehicle, a battery swap facility for executing a battery swap process, and the start-stop control device described above for a battery swap facility. The battery swap station may have the above features and advantages, for which reference can be made to the above descriptions of the start-stop control device and the start-stop control method, and details are not described herein again.

Finally, the disclosure further relates to a computer-readable storage medium for implementing the start-stop control method for a battery swap facility in a battery swap station according to one or more embodiments of the disclosure. The computer-readable storage medium mentioned herein includes various types of computer storage media, and may be any usable medium accessible to a general-purpose or special-purpose computer. For example, the computer-readable storage medium may include a RAM, a ROM, an EPROM, an E'PROM, a register, a hard disk, a removable hard disk, a CD-ROM or another optical memory, a magnetic disk memory or another magnetic storage device, or any other transitory or non-transitory media that can carry or store expected program code having an instruction or data structure form and be accessible to the general-purpose or special-purpose computer or a general-purpose or special-purpose processor. For descriptions about the computer-readable storage medium according to the disclosure, reference can be made to the descriptions about the start-stop control method according to the disclosure, and details are not described herein again.

It should be understood that all of the above preferred embodiments are exemplary rather than limiting, and any modification or variation made by those skilled in the art to the specific embodiments described above without departing from the concept of the disclosure shall fall within the scope of legal protection of the disclosure.

## Claims

1. A start-stop control device for a battery swap facility, the start-stop control device comprising:
a calculation unit configured to perform detection on the battery swap facility and a battery swap process executed by the battery swap facility, and generate interactive information about start and stop of the battery swap facility based on a detection result, which interactive information is then transmitted to both a control unit and a central control unit;
the control unit configured to generate, based on the interactive information, a control command for controlling the start and stop of the battery swap facility, the control command being reported to the central control unit as battery swap state information; and
the central control unit configured to perform evaluation on the interactive information and the battery swap state information, and selectively issue a manual intervention request based on an evaluation result,
wherein the control unit is configured to perform detection on a communication state between the control unit and the calculation unit in real time based on the interactive information, and generate a control command for stopping the battery swap facility in response to a communication abnormality.

2. The start-stop control device according to claim 1, wherein the interactive information carries a signal transmission identifier, algorithm state information about a calculation algorithm deployed in the calculation unit, and suggestion information about the start and stop of the battery swap facility.

3. The start-stop control device according to claim 1 or 2, wherein the communication abnormality comprises at least one of: absence of the interactive information, an abnormality in the signal transmission identifier, and inconsistency between the algorithm state information and an operating state of the control unit.

4. The start-stop control device according to any one of claims 1 to 3, wherein the central control unit is configured to generate the manual intervention request in response to inconsistency between the received interactive information and the battery swap state information, or in response to a failure to receive the interactive information and/or the battery swap state information, and the manual intervention request is transmitted to an external human-machine interaction apparatus.

5. The start-stop control device according to claim 4, wherein the central control unit is configured to generate an abnormality handling log while generating the manual intervention request, and the control unit is configured to generate the abnormality handling log in the case of the communication abnormality.

6. The start-stop control device according to any one of claims 1 to 5, wherein the calculation unit comprises: an edge calculation device, a cloud calculation device connected in series at a lower level of the edge calculation device, and a confidence level assessment device, wherein a cloud calculation algorithm deployed in the cloud calculation device has a higher confidence level than an edge calculation algorithm deployed in the edge calculation device, and the cloud calculation device is activated in response to determining, by means of the confidence level assessment device, that the edge calculation device has a confidence level lower than a first preset threshold.

7. The start-stop control device according to claim 6, wherein the confidence level assessment device is further configured to compare a confidence level of the cloud calculation device with a second preset threshold, and issue the manual intervention request in response to the confidence level being lower than the second preset threshold, wherein the second preset threshold is higher than the first preset threshold.

8. A start-stop control method, which is executable by a start-stop control device according to any one of claims 1 to 7, the method comprising the steps of:
performing detection on a state of a battery swap facility and a state of a battery swap process in real time, and generating interactive information based on the state of the battery swap facility and the state of the battery swap process;
determining a communication state between a control unit and a calculation unit based on the interactive information, and generating a control command for controlling start and stop of the battery swap facility; and
evaluating a matching degree between the interactive information and the control command, and selectively issuing a manual intervention request based on the matching degree,
wherein when the communication state indicates a communication abnormality, a control command for stopping operation of the battery swap facility is generated.

9. The start-stop control method according to claim 8, wherein the generating interactive information based on the state of the battery swap facility and the state of the battery swap process is performed by:
generating the interactive information by means of an edge calculation algorithm and based on the state of the battery swap facility and the state of the battery swap process; obtaining a confidence level of the edge calculation algorithm and comparing the confidence level with a first preset threshold, and if the confidence level is greater than or equal to the first preset threshold, outputting the interactive information, otherwise activating a cloud calculation algorithm and regenerating interactive information by means of the cloud calculation algorithm; and
obtaining a confidence level of the cloud calculation algorithm and comparing the confidence level with a second preset threshold, and if the confidence level is greater than or equal to the second preset threshold, outputting the interactive information generated by the cloud calculation algorithm, otherwise issuing the manual intervention request.

10. The start-stop control method according to claim 9, wherein before activation of the cloud calculation algorithm, calculation tasks to be performed by the cloud calculation algorithm are prioritized, wherein high-priority calculation tasks are processed first, and low-priority calculation tasks are recorded and delayed.

11. A battery swap station, comprising a traction battery, a battery swap facility for executing a battery swap process, and a start-stop control device for the battery swap facility according to any one of claims 1 to 7.

12. A computer-readable storage medium having a computer program stored thereon, wherein when the computer program is executed by a processor, a start-stop control method for a battery swap facility according to any one of claims 8 to 10 is implemented.
